# EUROPEAN PATENT APPLICATION

(11) **EP 2 093 779 A1**
(43) Date of publication of application: **26.08.2009**
(21) Application number: 07830407.8
(22) Date of filing: 17.10.2007
(51) Int. Cl.: H01G 9/058, H01G 9/00, H01M 4/04, H01M 10/36

(54) **ELECTRICITY STORAGE DEVICE, USE THEREOF, AND PRODUCTION METHOD THEREOF**

(30) Priority: 08.11.2006 JP 2006302800
(71) Applicant: Toyota Jidosha Kabushiki Kaisha, Toyota-shi, Aichi 471-8571 (JP)
(72) Inventor: TSUJIKO, Akira, Toyota-shi Aichi 471-8571 (JP)
(74) Representative: Intes, Didier Gérard André
(86) International application number: PCT/JP2007/070673
(87) International publication number: WO 2008/056536

(57) **Abstract**

Opposing electrode pairs (18a to 18c, 24a to 24c) are formed interposed separators (36a to 36c). The separators (36a to 36c) are porous, and thus nonaqueous electrolyte solution (12) can pass through the interior of the separators. Catalysts are adhered to regions, which are in direct contact with the nonaqueous electrolyte solution, of the surface of members forming an electricity storage device (10), namely catalysts (26b, 26c, 26f) being respectively adhered on the surfaces of electrode active material layers (16a to 16c,) and catalysts (26a, 26d, 26e) being respectively adhered on the surfaces of electrode active material layers (20a to 20c). The catalysts (26a to 26f) decompose water but do not decompose the nonaqueous electrolyte solution.

## Description

The present application claims priority based on Japanese Patent Application No. 2006-302800 filed on November 8, 2006, the entire contents of which are hereby incorporated by reference into this specification.

### Technical Field

The present invention relates to an electricity storage device. More particularly, the present invention relates to an electricity storage device having an opposing electrode pair with nonaqueous electrolyte solution interposed therebetween, and a use thereof. The present invention also relates to a method for manufacturing the electricity storage device. The electricity storage device may be, for instance, a device that stores electricity by using physical phenomena, such as an electric double-layer capacitor, or a device that stores electricity by using chemical reactions, such as a secondary battery.

### Background Art

A lithium-ion secondary battery using nonaqueous electrolyte solution is disclosed in Japanese Patent Application Publication No. 10-83818. The positive electrode of the lithium-ion secondary battery is formed by mixing a carbon material and an oxide material having a higher electron conductivity than the carbon material. That is, the electron conductivity of the positive electrode is increased by mixing into the electrode the oxide material having high electron conductivity.

### Disclosure of Invention

### Problem to be Solved by the Invention

In an electricity storage device using nonaqueous electrolyte solution, water may infiltrate into the electricity storage device during the manufacturing process or during its use. When water infiltrate into the electricity storage device, the water may react with the nonaqueous electrolyte solution, whereupon the electrodes may become covered by the resulting reaction products. This may reduce the conductivity of the electrode surface, and may impair the charge/discharge characteristics of the electricity storage device. Even if intrusion of water into the electricity storage device is avoided to the utmost degree during the manufacturing process, it is difficult to completely prevent water from getting into the electricity storage device during use of the electricity storage device. Thus, it is not possible to avoid deterioration of the charge/discharge characteristics of the electricity storage device during its use, even if water is prevented from infiltrating into the electricity storage device during the manufacturing process. With a view to maintaining the charge/discharge characteristics of the electricity storage device at a desired level for a long period of time, conventional approach involved providing extra electricity storage devices in an apparatus in which the electricity storage devices are arranged, such that the extra devices may compensate for the anticipated loss of charge/discharge characteristics of the electricity storage devices. This results in large-sized electricity storage devices, and also the space taken up by the apparatus in which the electricity storage devices are arranged becomes accordingly larger.
As disclosed in Japanese Patent Application Publication No. 10-83818, when a metal oxide material having higher electron conductivity than a carbon material is used in an electrode, the metal oxide material can be expected to function as a catalyst that decomposes water which had adulterated into the nonaqueous electrolyte solution. However, in a case where the electrode is formed by mixing the carbon material and the metal oxide material, the surface of the metal oxide material functioning as a catalyst becomes covered with, for instance, the carbon material and/or with a binder for binding the carbon material and the catalyst. This occurrence reduces the surface area over which the catalyst comes into contact with the water contaminating the nonaqueous electrolyte solution. That is, in assessing the catalyst in terms of its function of decomposing water that had gotten into the electricity storage device, an effect that may commensurate with the amount of catalyst used in the electrode fails to be achieved. In the technology disclosed in Japanese Patent Application Publication No. 10-83818, the metal oxide material used as the catalyst is kneaded into electrodes. As a result, the water-decomposing ability of the catalyst is low, and the charge/discharge characteristics of the electricity storage device cannot be prevented from degrading as the electricity storage device is used. Enlarging the space in which the electricity storage devices are arranged becomes therefore inevitable.
There are metal oxide materials that have lower electric conductivity than carbon materials. Using as an electrode material a metal oxide material yet electron conductive but has lower electron conductivity than the carbon material may reduce the electric conductivity of the electrode. There may thus be a decrease in both electric conductivity and water decomposition ability when the electrode is formed by mixing the carbon material and the metal oxide material. The present invention provides a technology for effectively decomposing water that had infiltrated into an electricity storage device and for preventing loss of the charge/discharge characteristics of the electricity storage device, without lowering electric conductivity.

### Means to Solve the Problem

When water reacts with nonaqueous electrolyte, their reaction products form a film over the electrode surface. This film formed over the electrode surface gives rise to the internal resistance of the electricity storage device to rise, and impairs the charge/discharge characteristics of the electricity storage device. In the present invention, reactions between water and the nonaqueous electrolyte solution may be inhibited by effectively decomposing water that had intruded into the electricity storage device, and loss of charge/discharge characteristics in the electricity storage device may be prevented.

The electricity storage device of the present invention has a pair of opposing electrodes and nonaqueous electrolyte solution interposed inbetween the electrodes. A catalyst that decomposes water and does not decompose the nonaqueous electrolyte solution is adhered to a region of a surface of one member composing the electricity storage device at where the nonaqueous electrolyte solution comes into direct contact.
The "member composing the electricity storage device" does not denote only an electrode. The "member" may be any member that composes the electricity storage device; e.g. a separator that electrically separates a positive electrode and a negative electrode, or a container that houses the pair of electrodes and the separator. As denoted by the feature "region of a surface of one member composing the electricity storage device at where the nonaqueous electrolyte solution comes into direct contact", the configuration of the present invention differs from that of a region being in contact with the nonaqueous electrolyte solution, for instance, in the inside of a porous member (such as the electrode), since the inside of the porous member is not the surface of the member. The characterizing feature of the present invention is that the catalyst is adhered to the surface of the member, which differs from the feature of the catalyst being kneaded into the electrode.

In the above electricity storage device, the catalyst is adhered to the surface of one of the member comprised in the electricity storage device. As a result, this allows increase in the surface area over which the catalyst comes into contact with the nonaqueous electrolyte solution. The catalyst can therefore decompose water that undesirably infiltrate into the electricity storage device in an effective manner, thereby inhibit reactions between water and the nonaqueous electrolyte solution. This prevents substances generated in the reaction between water and the nonaqueous electrolyte solution from covering the electrode surface, thereby preventing loss of charge/discharge characteristics in the electricity storage device. According to the configuration, the internal resistance of the electricity storage device does not rise even after prolonged use, and hence the charge/discharge characteristics of the electricity storage device can be likewise preserved at a good level for a long period of time. It is then no longer necessary to increase the surface area of electrodes beyond what is needed, with the anticipation of a loss of charge-discharge characteristics in the electricity storage device. Accordingly, the electricity storage device can be made more compact. Since charge/discharge characteristics of the electricity storage device do not deteriorate over long period of time, it is no longer required to provide electricity storage devices larger than necessary in the apparatus that utilizes the electricity storage devices, so that the anticipated loss of charge/discharge characteristics of the electricity storage devices can be compensated.

In the electricity storage device of the present invention, preferably, the catalyst may be adhered to the surface of one of the electrodes. Although as exemplified above the catalyst can be adhered to the separator or to the inner face of the container, the catalyst may preferably be adhered to the electrode surface.
In such electricity storage device, water in the vicinity of the surface of the electrode is decomposed readily. Water in the vicinity of the surface of the electrode reacts readily with the nonaqueous electrolyte solution while voltage is being applied to the electrodes of the electricity storage device. According to the catalyst adhered to the surface of the electrode, the reactions between water and the nonaqueous electrolyte solution at the region where such reactions are most likely to occur (e.g. in the vicinity of the surface of the electrode) are inhibited. The feature "catalyst adheres to the surface of the electrode" does not mean that the catalyst is only adhered to the surface of the electrode. The feature denotes as well configurations in which the catalyst is adhered to the surface of a member that is in contact with the surface of the electrode in the electricity storage device, the catalyst being thus adhered, as a result, to the surface of the electrode.

In the electricity storage device of the present invention, preferably, the catalyst may be a metal oxide material.
The metal oxide material has the characteristic of decomposing water without decomposing the nonaqueous electrolyte solution. Since the metal oxide material can be applied in the form of a solution or a paste, the catalyst can be adhered by way of a simple method.
Preferably, the metal oxide material may be at least one material selected from among IrO₂, RuO₂ and WO₃.
Such metal oxide materials have high ability of decomposing water without decomposing the nonaqueous electrolyte solution.

In the electricity storage device of the present invention, preferably, the nonaqueous electrolyte solution having the specific gravity greater than that of water may be used. Furthermore, in one area of the one of the members composing the electricity storage device, the catalyst may be adhered in a greater amount, while in other area of the one of the members composing the electricity storage device, the catalyst may not be adhered, or may be adhered in a smaller amount.
In this case, the electricity storage device is preferably used in such a manner that the area to which the catalyst is adhered in a greater amount is disposed on the upper side in the gravity direction, and the area, to which the catalyst is adhered in a smaller amount or is not adhered, is disposed on the lower side in the gravity direction.

In such the electricity storage device, water contaminating into the electricity storage device can be decomposed efficiently. Since the specific gravity of the utilized nonaqueous electrolyte solution is greater than that of water, water intruding into the electricity storage device concentrates locally on the upper side in the gravity direction in the electricity storage device. A greater amount of catalyst is adhered to the upper area in the electricity storage device where water concentrates locally, so that water that had intruded into the electricity storage device can be efficiently decomposed.
Also, since the catalyst may be less abundant on the lower side in the gravity direction, this allows reduction in the amount of catalyst used. Specifically, there may be no catalyst adhered on the lower side in the gravity direction. This allows manufacturing the electricity storage device that inhibits loss of charge/discharge characteristics over long period of time at a low cost. Furthermore, the usage of catalyst may result in increased electrode resistance. Thus, by making the catalyst less abundant on the lower side in the gravity direction, increase of internal resistance caused by the catalyst can be also suppressed.
Herein, the feature "greater amount of catalyst is adhered to one area of the member comprised in the electricity storage device", and "smaller amount of catalyst is adhered to other area of the member comprised in the electricity storage device" does not refer only to a configuration in which the amount of catalyst (the amount may denote concentration or thickness, when the catalyst is formed as a layer) is such that "the catalyst is adhered in a definite greater amount to one area of the member composing the electricity storage device" and "the catalyst is adhered in a definite smaller amount to other area of the member forming the electricity storage device". In the aforesaid term, the amount of catalyst may "vary continuously from one area to the other area in the surface of the member forming the electricity storage device".

The electricity storage device of the present invention is not particularly limited, so long as it has the pair of electrodes opposing each other, with the nonaqueous electrolyte solution therebetween, and configured to store electricity. The electricity storage device may be embodied, for instance, as an electric double-layer capacitor. The electricity storage device may also be embodied, alternately, as a lithium-ion secondary battery.

The charge/discharge characteristics of the electricity storage device can be likewise preserved at a good level for long period of time, and thus the electricity storage device can be used in a wide variety of applications. Such applications may include, for instance, personal computers, mobile phones, electric automobiles, hybrid cars and the like.

The present invention may also provide a method of using the electricity storage device. In this method of use, the electricity storage device may be provided with the nonaqueous electrolyte solution with the specific gravity greater than that of water. Further, in one area of the one of the members composing the electricity storage device, the catalyst is adhered in a greater amount, and in other area of the one of the members composing the electricity storage device, the catalyst is not adhered, or is adhered in a smaller amount. Hence, when the electricity storage device is used, the area at which the catalyst is adhered in a greater amount is disposed on the upper side in the gravity direction.

The above method of use allows to effectively inhibit reactions between the nonaqueous electrolyte solution and water that contaminates into the electricity storage device.
The phenomenon of reactions between the nonaqueous electrolyte solution and water contaminating into the electricity storage device intensifies during operation of the electricity storage device (when voltage is applied to the electrodes of the electricity storage device). Reactions between water and the nonaqueous electrolyte solution do not actively occur when the electricity storage device is not in operation (when no voltage is applied to the electrodes of the electricity storage device). It is thus important that the catalyst be adhered to regions were water that had infiltrated into the electricity storage device is present during operation of the electricity storage device. In the method of use of the present invention, the catalyst comes efficiently into contact with water contaminating into the electricity storage device.

The present invention may also provide a method for manufacturing the electricity storage device.
The method for manufacturing an electricity storage device of the present invention comprises forming an electrode, adhering a catalyst that decomposes water and does not decompose nonaqueous electrolyte solution to a predetermined region of a surface of the electrode, disposing surfaces of at least one pair of electrodes opposing each other with a separator interposed inbetween, housing the at least one pair of electrodes and the separator in a container, and housing the nonaqueous electrolyte solution in the container.

The above manufacturing method allows the catalyst to decompose water even when water gets into the electricity storage device during the manufacturing process of the electricity storage device or while the electricity storage device is being used. The manufacturing method of the present invention allows manufacturing the electricity storage device that inhibits loss of charge/discharge characteristic even when used for long period of time. Moreover, no additional equipment need be provided for preventing water from contaminating into the electricity storage device during manufacture of the electricity storage device. The electricity storage device can thus be manufactured at a low cost.
Another method for manufacturing the electricity storage device of the present invention may comprise forming an electrode, adhering a catalyst that decomposes water and does not decompose nonaqueous electrolyte solution to a predetermined region of surface of a separator, disposing surfaces of at least one pair of electrodes opposing each other with the separator interposed therebetween, housing the at least one pair of electrodes and the separator in a container, and housing nonaqueous electrolyte solution in the container.

The above manufacturing method as well allows the catalyst to decompose water even when water gets into the electricity storage device during the manufacturing process of the electricity storage device or while the electricity storage device is being used. Moreover, adhering the catalyst can be carried out before the process of electrode formation is completed. This allows to save the manufacturing time of the electricity storage device.

### Effects of the Invention

The present invention allows inhibiting reactions between the nonaqueous electrolyte solution and water that contaminates into the electricity storage device. The invention allows maintaining the charge/discharge characteristics of the electricity storage device over long period of time. Also, the invention saves the need of making the electrodes in the electricity storage device unnecessarily large, due to which the electricity storage device can be made more compact.

### Brief Description of the Drawings

Fig. 1 is a cross-sectional diagram of an electricity storage device of a first example;
Fig. 2 is a cross-sectional diagram of an electricity storage device of a second example;
Fig. 3 illustrates a manufacturing step of an electricity storage device by a first and a second manufacturing method;
Fig. 4 illustrates a manufacturing step of an electricity storage device by the first manufacturing method;
Fig. 5 illustrates a manufacturing step of an electricity storage device by the first and second manufacturing method; and
Fig. 6 illustrates a manufacturing step of an electricity storage device by the second manufacturing method.

### Embodiments of the Invention

Some features of the present examples are set forth below.
(First feature) A paste for electrode active material layers may be manufactured by mixing activated carbon, carbon black and carboxymethylcellulose. The paste may then be coated onto the surface of a collector foil, thus to manufacture an electrode.
(Second feature) An electrode active material layer may be dried, after which a catalyst has been coated onto the surface of the layer.
(Third feature) Electrodes may be arranged opposing each other interposing a separator therebetween through the interior of which nonaqueous electrolyte solution can penetrate.

### (First embodiment)

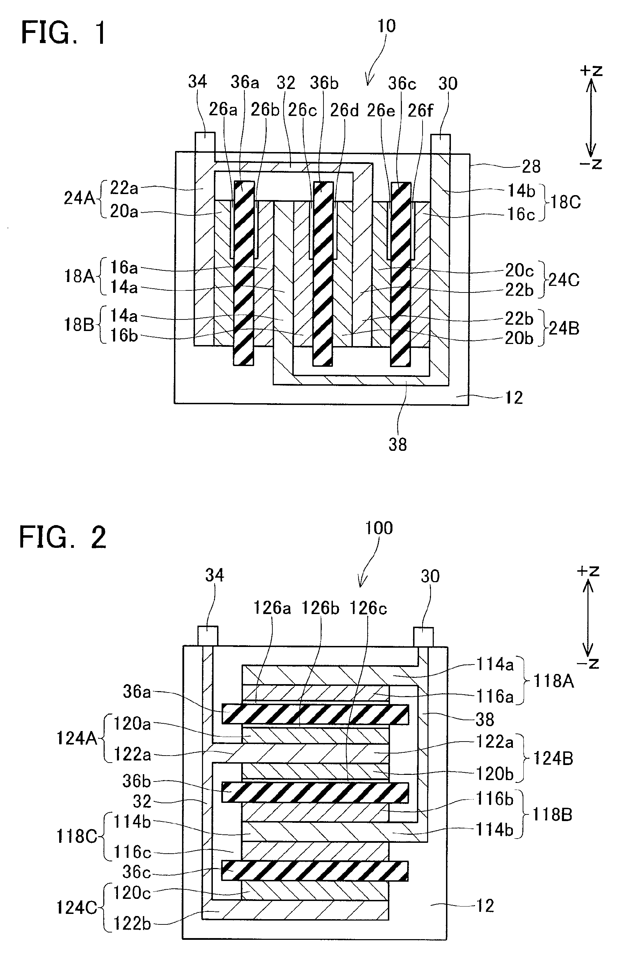

The structure of an electricity storage device 10 according to the present embodiment is explained below with reference to the accompanying drawings. In the present embodiment, an electric double-layer capacitor will be indicated as an example of the electricity storage device. Fig. 1 illustrates a cross-sectional diagram of the electricity storage device 10. The arrows in the figure indicate the direction of gravity. The +Z direction denotes upward of the gravity direction, and the -Z direction denotes downward of the gravity direction. The electricity storage device 10 comprises a first electrode pair 24A, 18A, a second electrode pair 18B, 24B, and a third electrode pair 24C, 18C. The electrode 24A has a collector 22a and an electrode active material layer 20a. The electrode 18A has a collector 14a and an electrode active material layer 16a. The electrode 18B has the collector 14a and an electrode active material layer 16b. The electrode 24B has a collector 22b and an electrode active material layer 20b. The electrode 24C has the collector 22b and an electrode active material layer 20c. The electrode 18C has a collector 14b and an electrode active material layer 16c. The collector 14a is shared by the electrode 18A and the electrode 18B. The collector 22b is shared by the electrode 24B and the electrode 24C.
The reference numerals 36a, 36b, 36c denote separators. The separators 36a, 36b, 36c are porous and allow nonaqueous electrolyte solution 12 to pass through their interior. The electrodes in the first electrode pair 24A, 18A opposingly face each other with interposing separator 36a inbetween, and thus oppose each other with the nonaqueous electrolyte solution 12 interposed therebetween. The electrodes in the second electrode pair 18B, 24B opposingly face each other with interposing separator 36b inbetween, and thus oppose each other with the nonaqueous electrolyte solution 12 interposed therebetween. The electrodes in the third electrode pair 24C, 18C opposingly face each other with interposing separator 36c inbetween, and thus oppose each other with the nonaqueous electrolyte solution 12 interposed therebetween.
The collectors 14a, 14b are connected by wiring 38, whereas the collectors 22a, 22b are connected by wiring 32. The collectors 14a, 14b are connected to an outer terminal 30, and the collectors 22a, 22b are connected to an outer terminal 34. The electricity storage device 10 can be charged through application of voltage between the outer terminals 30, 34. The electricity storage device 10 can discharge by connecting a load between the outer terminals 30, 34.
A catalyst 26a is adhered to the +Z side on the surface of the electrode active material layer 20a. A catalyst 26b is adhered to the +Z side on the surface of the electrode active material layer 16a. A catalyst 26c is adhered to the +Z side on the surface of the electrode active material layer 16b. A catalyst 26d is adhered to the +Z side on the surface of the electrode active material layer 20b. A catalyst 26e is adhered to the +Z side on the surface of the electrode active material layer 20c. A catalyst 26f is adhered to the +Z side on the surface of the electrode active material layer 16c. In the present embodiment, the catalysts 26a to 26f are adhered to 40% of the surface region of the electrode active material layers 16a to 16c, 20a to 20c, from the +Z side end towards the -Z side.

The separator 36a electrically separates the electrodes of the first electrode pair 24A, 18A as well as the catalysts 26a, 26b. The separator 36b electrically separates the electrodes of the second electrode pair 18B, 24B as well as the catalysts 26c, 26d. The separator 36c electrically separates the electrodes of the third electrode pair 24C, 18C as well as the catalysts 26e, 26f.
The reference numeral 28 in the figure denotes a container in which the first electrode pair 24A, 18A, the second electrode pair 18B, 24B, the third electrode pair 24C, 18C, the separators 36a to 36c, and the nonaqueous electrolyte solution 12 are housed. The specific gravity of the nonaqueous electrolyte solution 12 is greater than that of water. During use of the electricity storage device 10, the regions onto which the catalysts 26a to 26f are adhered are arranged on the +Z side. Water infiltrating into the electricity storage device 10 concentrates locally on the +Z side within the electricity storage device 10. That is, the catalysts are adhered to regions at which water concentrates locally within the electricity storage device 10. Consequently, the water that had entered into the electricity storage device 10 can thereby be efficiently decomposed.

In the present embodiment, aluminum (Al) is used as the collectors 14a, 14b, 22a, 22b, and activated carbon (specific surface area: 2000 m²/g) is used as the electrode active material layers 16a to 16c, 20a to 20c. The nonaqueous electrolyte solution 12 results from mixing tetraethylammonium tetrafluoroborate (TEABF₄) into a propylene carbonate (PC) solvent. The specific gravity of a mixture of PC and TEABF₄ is greater than that of water. The catalysts 26a to 26f have the characteristic of decomposing water without decomposing the nonaqueous electrolyte solution. The present example uses metal oxide materials such as iridium dioxide (IrO₂), ruthenium dioxide (RuO₂) and a tungsten trioxide (WO₃).

### (Second embodiment)

Fig. 2 illustrates an electricity storage device 100. The electricity storage device 100 is a modification of the electricity storage device 10. As for the configuration of the electricity storage device 100 that is substantially identical to that of the electricity storage device 10, the explanation of such will be omitted by assigning identical reference numerals or reference numerals having the same two last digits.
A catalyst 126a is adhered on the surface of an electrode active material layer 116a. A catalyst 126b is adhered on the surface of an electrode active material layer 120a. A catalyst 126c is adhered on the surface of an electrode active material layer 120b. No catalyst is adhered on the surfaces of the electrode active material layers 116b, 116c, and 120c. During use of the electricity storage device 100, the electrode active material layers 116a, 120a, 120b onto which the catalysts 126a to 126c are adhered are arranged on the +Z side.
The water that had entered into the electricity storage device 100 concentrates locally on the +Z side within the electricity storage device 100. That is, the catalysts are adhered to regions at which water concentrates locally within the electricity storage device 100. The water contaminating the electricity storage device 100 can be efficiently decomposed as a result.

### (First manufacturing method)

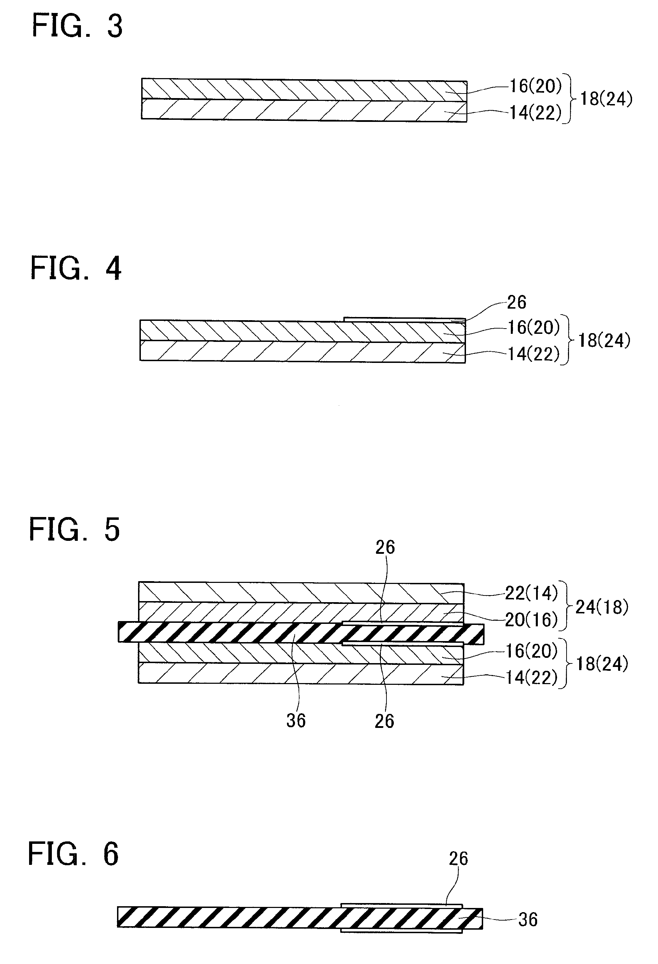

A method for manufacturing the electricity storage devices 10, 100 is explained below. In broad terms, the electrode 10 and the electrode 100 differ only in the orientation of the electrodes in the electricity storage device and in the positions at which the catalysts are adhered on the surface of the electrode active material layers. Below, the method for manufacturing the electricity storage device 10 will be exemplified.
Firstly, activated carbon (specific surface area: 2000 m²/g), carbon black and carboxymethylcellulose (hereinafter, CMC) are weighed to a weight ratio of 8:1:1, and are then mixed together. A suitable amount of water is then added to the obtained mixture (i.e. water in an amount of about half the weight of the mixture), followed by kneading to paste-like consistence. Activated carbon functions as the main material of the electrode active material layers, whereas carbon black functions as a material for increasing the conductivity of the activated carbon, and CMC functions as a binder.
The electrodes 18A to 18C and electrodes 24A to 24C are completed next. The manufacturing method of the electrodes 18A to 18C and electrodes 24A to 24C is substantially the same. Thus, only the method for manufacturing the electrodes 18A to 18C will be explained. The method for manufacturing the electrodes 24A to 24C, which is not explained, can be understood based on the reference numerals in brackets in the drawings. The method for manufacturing the electrodes 18A, 18B, 18C is substantially the same, and thus the letters suffixed to the reference numerals will be omitted hereinafter.
As illustrated in Fig. 3, the aluminum collector 14 is prepared, and then the paste of the electrode active material layer is coated onto the surface of the collector 14 using a doctor blade. The paste is then dried at 95°C, to form the electrode active material layer 16 on the surface of the collector 14, and the electrode 18 is thereby completed.
Next, a catalyst paste is coated onto a predetermined region on the surface of the electrode active material layer 16 (in this case, over the region of 40% of the surface, from one end of the electrode active material layer towards the other end), as illustrated in Fig. 4. The catalyst paste 26 is then dried at 120°C, to adhere the catalyst 26 onto the surface of the electrode active material layer 16. In accordance with the above process, a plurality of electrodes 18 in which the catalyst 26 is adhered to a predetermined region on the surface of the electrode active material layer 16 is manufactured.
The faces onto which the catalysts 26 are adhered in the electrode pair 18, 24 are then arranged oppose each other with a separator 36 interposed in between, as illustrated in Fig. 5. The collectors 14a, 14b are connected by wiring 38, while the collectors 22a, 22b are connected by wiring 32, after which the entirety thereof is placed in the container 28. Thereafter, the container 28 houses the electrolyte solution 12, and is sealed, to complete the electricity storage device 10 illustrated in Fig. 1.

### (Second manufacturing method)

Another method for manufacturing the electricity storage devices 10, 100 is explained next. Steps that are substantially identical to those in the first manufacturing method will not be explained again. In the second manufacturing method as well, only the method for manufacturing the electricity storage device 10 will be explained.
After completion of the electrode 18 illustrated in Fig. 3, the catalyst 26 are adhered to a predetermined region on both sides of the separator 36, as illustrated in Fig. 6. The method for adhering the catalyst 26 is identical to that of the first manufacturing method. When adhering the catalyst 26, the catalyst paste is adhered only to the front face of the separator 36. That is, the viscosity of the catalyst paste is adjusted in such a manner that the catalyst paste does not extend continuously from the front face to the rear face of the separator 36.
Next, the electrode pair 18, 24 is oppositely disposed on both faces of the separator 36, as illustrated in Fig. 5. Subsequent steps are identical to the first manufacturing method, and hence an explanation thereof will be omitted.
The step of forming the electrode active material layer 16 on the surface of the collector 14 may precede or follow the step of adhering the catalyst 26 onto the surface of the separator 36. Alternatively, both steps may be carried out simultaneously.

### (Experiment 1)

The catalysts below were adhered on the surfaces of the electrode active material layers 16a to 16c, 20a to 20c, to manufacture electricity storage devices 10 of Experimental examples 1 to 3 using the first manufacturing method. In Comparative example 1, an electricity storage device 10 was manufactured with no catalyst adhered at all on the surfaces on the electrode active material layers 16a to 16c, 20a to 20c. The letters suffixed to the reference numerals of the electrode active material layers 16a to 16c, 20a to 20c, the collectors 14a, 14b, 22a, 22b and the catalysts 26a to 26f will be omitted below.
Experimental example 1: IrO₂ was used as the catalyst 26.
Experimental example 2: RuO₂ was used as the catalyst 26.
Experimental example 3: WO₃ was used as the catalyst 26.
Comparative example 1: no catalyst 26.

### (Internal resistance rise rate test)

An internal resistance rise rate test was conducted on the electricity storage devices 10 of Experimental examples 1 to 3 manufactured in the present Experiment 1 and of Comparative example 1. The internal resistance rise rate test was conducted in a thermo-hygrostat (temperature 40°C, relative humidity 95%). Firstly, the electricity storage devices 10 were charged by applying a constant voltage of 2.5 V, followed by discharge at constant current, to measure initial internal resistance. Thereafter, the electricity storage devices 10 were applied with a constant voltage of 2.5 V for 240 hours. The internal resistance was measured after the 240 hours had elapsed. The internal resistance rise rate was determined by the rate of increase of internal resistance in the electricity storage devices 10 after 240 hours of voltage application, relative to the initial internal resistance in the electricity storage devices 10. Internal resistance was measured in accordance with the standard (JEITA RC-2377) of the Japan Electronics and Information Technology Industries Association. The results for internal resistance rise rate are given in Table 1.

**Table 1**

| | Catalyst type | Catalyst adhesion position in electricity storage device | Catalyst adhesion position on electrode | Internal resistance rise rate (%) |
|---|---|---|---|---|
| Exp. example 1 | IrO₂ | Upper side | Active material surface | 102.1 |
| Exp. example 2 | RuO₂ | Upper side | Active material surface | 103.2 |
| Exp. example 3 | WO₃ | Upper side | Active material surface | 103.8 |
| Exp. example 4 | IrO₂ | Throughout | Active material surface | 107.8 |
| Exp. example 5 | IrO₂ | Lower side | Active material surface | 109.4 |
| Comp. example 1 | None added | - - | Active material surface | 113.4 |
| Comp. example 2 | IrO₂ | Upper side | Between collector and active material | 116.2 |
| Comp. example 3 | IrO₂ | Throughout | Inside active material | 114.1 |
| Comp. example 4 | Pt | Upper side | Active material surface | Not measurable |

As Table 1 shows, the electricity storage devices 10 in which the catalysts 26 of Experimental examples 1 to 3 are adhered on the surface of the electrode active material layers 16, 20 exhibit a lower internal resistance rise rate after 240 hours than the electricity storage device 10 of Comparative example 1, in which no catalyst 26 is adhered. This indicates that reaction between the water and the nonaqueous electrolyte solution 12 in the electricity storage devices 10 is inhibited through decomposition of water by the catalyst 26 in the electricity storage devices 10.

### (Experiment 2)

IrO₂ 26 was adhered on the surfaces of the electrode active material layers 16, 20, to manufacture electricity storage devices 10 of Experimental examples 4 and 5 below by using the first manufacturing method. In Experimental examples 4, 5, the positions at which the catalysts 26 were adhered on the surface of the electrode active material layers 16, 20 differed in the electricity storage devices 10, as given below.
Experimental example 4: The catalyst 26 was adhered on the entire surface of the electrode active material layers 16, 20.
Experimental example 5: The catalyst 26 was adhered only to the -Z side on the surface of the electrode active material layers 16, 20.
An internal resistance rise rate test was also conducted on the electricity storage devices of Experimental examples 4 and 5. The results are given in Table 1. As Table 1 shows, the internal resistance rise rate was also lower in both Experimental examples 4 and 5 than in Comparative example 1. That is, the rise in internal resistance can be curtailed by causing the catalyst 26 to be adhered on the surface of the electrode active material layers 16, 20, irrespective of the position at which the catalyst 26 is adhered. However, both Experimental examples 4 and 5 exhibited a greater internal resistance rise rate than in the case (i.e. Experimental example 1) where the catalyst 26 is adhered only to the +Z side on the surface of the electrode active material layers 16, 20. When the catalyst 26 is adhered only to the lower portion on the surface of the electrode active material layers 16, 20, the catalyst 26 is not adhered at the portion (+Z side) at which water is locally more abundant. As a result, it becomes more difficult for the catalyst 26 to decompose water efficiently (Experimental example 5). Contact between the electrode active material layers 16, 20 and the nonaqueous electrolyte solution 12 is hampered when the catalyst 26 is adhered on the entire surface of the electrode active material layers 16, 20. This causes the internal resistance rise rate to increase as a result (Experimental example 4).

### (Experiment 3)

After adhering the catalyst 26 to a predetermined region on the collectors 14, 22, an electrode active material layer 16 was formed on the surface of the collector 14 onto which the catalyst 26 was adhered, and an electrode active material layer 20 was formed on the surface of a collector 22, to complete thereby an electrode. An electricity storage device (i.e. Comparative example 2) substantially identical to that of Experiment 1 was then manufactured using this electrode. The position at which the catalyst 26 was adhered was the same as that of Experiment 1. That is, the catalyst 26 adhered on the surfaces of the collectors 14, 22 only over the area of 40% of the surface, from the +Z side end towards the -Z side end.
An internal resistance rise rate test was also performed on the electricity storage device of Comparative example 2. The results are given in Table 1.
As Table 1 shows, the electricity storage device of Comparative example 2 exhibits a greater internal resistance rise rate than the electricity storage device (i.e. Comparative example 1) in which no catalyst 26 is adhered. When the catalyst 26 is adhered between the collector 14 and the electrode active material layer 16, the contaminating water is decomposed by the catalyst 26 between the collector 14 and the electrode active material layer 16. Likewise, when the catalyst 26 is adhered between the collector 22 and the electrode active material layer 20, the contaminating water is decomposed by the catalyst 26 between the collector 22 and the electrode active material layer 20. Gas generated upon decomposition of water by the catalyst 26 accumulates between the collector 14 and the electrode active material layer 16, or between the collector 22 and the electrode active material layer 20, thereby causing the internal resistance of the electricity storage device to rise. Also, gas generated upon decomposition of water by the catalyst 26 causes the electrode active material layer 16 to detach from the collector 14, or the electrode active material layer 20 to detach from the collector 22. The internal resistance of the electricity storage device rises also as a result.

### (Experiment 4)

Activated carbon (specific surface area: 2000 m²/g), carbon black and CMC were weighed to a weight ratio of 8:1:1, and were then mixed together. To the resulting mixture there was further added 5 wt% of IrO₂, followed by kneading to paste-like condition. This paste was coated onto the surface of a collector 14 using a doctor blade, followed by drying of the paste at 120°C. An electricity storage device (i.e. Comparative example 3) was manufactured thereafter in accordance with the method identical to the first manufacturing method.
The internal resistance rise rate test was also performed on the electricity storage device of Comparative example 3. The results are given in Table 1.
As Table 1 shows, the electricity storage device of Comparative example 3 exhibits a greater internal resistance rise rate than the electricity storage device (i.e. Comparative example 1) in which no catalyst 26 is adhered. As in the case of the electricity storage device of Comparative example 2, gas generated through decomposition of water accumulates in the electrode active material layer 16(22), causing the internal resistance of the electricity storage device to rise. Little catalyst 26 is exposed at the surface of the electrode active material layer 16, and hence the catalyst 26 decomposes water ineffectively. This influences also the rise in internal resistance.
The above shows that the internal resistance rise rate in the electricity storage device cannot be held down even when adding a catalyst to the electrode active material layer 16(22).
The results of Experiments 3 and 4 indicate that rises in the internal resistance of the electricity storage device cannot be suppressed when a catalyst is not adhered onto the region that comes in direct contact with water, within the surface of the members that form the electricity storage device. In other words, the results indicate that rises in the internal resistance of the electricity storage device cannot be suppressed even when the catalyst is adhered between the collectors and the electrode active material layers, or when the electrode active material layers are formed by kneading the catalyst in.

### (Experiment 5)

An electricity storage device 10 of Comparative example 4 was manufactured by adhering a platinum (Pt) catalyst 26 on the surface of electrode active material layers 16, 20, in accordance with the first manufacturing method. Platinum is characterized by decomposing not only water but also the nonaqueous electrolyte solution. the internal resistance rise rate test was also performed on the electricity storage device 10 of Comparative example 4, but it was not possible to measure the internal resistance rise rate of the electricity storage device 10. Even the initial internal resistance of the electricity storage device 10 could not be measured, due to decomposition of not only water but also the nonaqueous electrolyte solution 12, by the platinum catalyst, in the electricity storage device 10. This indicates that the electricity storage device 10 cannot function as such (cannot be charged). The results of the experiment indicate that rises in the internal resistance of the electricity storage device 10 cannot be suppressed unless the catalyst decomposes water without causing the nonaqueous electrolyte solution to decompose.

Other than the above, the technology of the present invention may also receive benefits of the following effects. Specifically, when electrodes are formed by mixing the carbon material and the catalyst, gases may be generated in the electrodes through decomposition of water that had entered into the electrode and comes into contact with the catalyst. Such gases may rupture the electrodes from inside. Even if gases are generated through decomposition of water, however, such gases are released in the configuration of the present invention through the interface between the electrodes and the separators. As a result, the electrodes are not damaged, and the internal resistance of the electricity storage device is prevented from rising.

The explanations of the present invention thus far are merely illustrative in nature, and are not meant to limit the scope of the claims in any way. The technology as recited in the claims includes various alterations and modifications to the specific examples illustrated above.
In the above example, the electric double-layer capacitor is explained as an example of the electricity storage device. However, the technology of the present invention can also be used in secondary batteries (for instance, lithium-ion secondary batteries and the like). That is, the technology of the present invention can be employed in any electricity storage device that comprises an opposing electrode pair having nonaqueous electrolyte solution interposed in between.
In the above example, for instance, the catalyst is adhered to the surface of the electrode active material layer that forms the electrode. The position at which the catalyst is adhered, however, is not limited on the surface of electrode active material layers. The nonaqueous electrolyte solution and the catalyst may be in direct contact, without other members interposed in between. For instance, the same suppressing effect on the internal resistance rise rate of the electricity storage device can be achieved when the catalyst is adhered on the surface of the separators. The catalyst may also be adhered to portion(s) on the surface(s) of the inner walls of the container in a direct contact with the nonaqueous electrolyte solution.

The above examples illustrate a stacked electricity storage device resulting from stacking cells having each a separator and an electrode pair. However, the electricity storage device may also be of single-cell type, having a separator and an electrode pair. A sheet-like cell having a separator and a pair of opposing electrodes, with the separator interposed in between, may be folded spirally into an electricity storage device (so-called wound-type electricity storage device).

In the above manufacturing methods there is explained the electricity storage device in which the surface of the electrodes disclosed in the first example is parallel to the vertical direction of the paper. However, the electricity storage device can also be manufactured in which the surfaces of the electrodes disclosed in the second example are perpendicular to the vertical direction of the paper. There may be thus manufactured an electrode in which the catalyst is adhered on the surface of the electrode active material layer, and an electrode in which no catalyst is adhered on the surface of the electrode active material layer. The electrode having the catalyst adhered thereto may then be arranged on the upper side in the electricity storage device, and the electrode having no catalyst adhered thereto may be arranged on the lower side in the electricity storage device.
In Experiment 1, IrO₂, RuO2 and WO₃ are used as the catalyst. The catalyst, however, is not limited to the above catalysts, and may be any catalyst that decomposes water without causing the nonaqueous electrolyte solution to decompose. The catalyst is preferably a metal oxide. Other than the above-described metal oxides, there can also be used, for instance, at least one metal oxide selected from among IrO₂, RuO₂, WO₃, rhodium dioxide (RhO₂), osmium dioxide (OsO₂) and tungsten dioxide (WO₂).
The technical elements explained in the present specification and drawings provide technical value and utility either independently or through various combinations. Also, the present invention is not limited to the combinations set forth in the claims at the time of filing. The purpose of the technology disclosed in the present specification and drawings is to satisfy multiple objectives simultaneously. Herein, satisfying any one of those objectives confers technical value and utility to the present invention.

## Claims

1. An electricity storage device comprising:
a pair of opposing electrodes with nonaqueous electrolyte solution inbetween, wherein
a catalyst that decomposes water and does not decompose the nonaqueous electrolyte solution is adhered to a region of a surface of at least one of components of the electricity storage device with which the nonaqueous electrolyte solution comes into direct contact.

2. The electricity storage device according to claim 1, wherein the catalyst is adhered on a surface of at least one of the pair of electrodes.

3. The electricity storage device according to claim 1 or 2, wherein the catalyst is a metal oxide.

4. The electricity storage device according to claim 3, wherein the metal oxide is at least one material selected from among IrO₂, RuO₂ and WO₃.

5. The electricity storage device according to any of claims 1 to 4, wherein
the nonaqueous electrolyte solution which is used has a specific gravity greater than that of water,
in one area of the one of the members composing the electricity storage device the catalyst is adhered in a greater amount, and
in an other area of the one of the members composing the electricity storage device the catalyst is not adhered, or is adhered in a smaller amount.

6. The electricity storage device according to any of claims 1 to 5, wherein the electricity storage device is an electric double-layer capacitor.

7. The electricity storage device according to any of claims 1 to 5, wherein the electricity storage device is a lithium-ion secondary battery.

8. An automobile comprising the electricity storage device according to any of claims 1 to 7.

9. A method of using the electricity storage device according to claim 5, comprising:
disposing, during use of the electricity storage device, on the upper side in the gravity direction the region to which the catalyst is adhered in a greater amount, and on the lower side in the gravity direction the region to which the catalyst is not adhered or is adhered in a smaller amount.

10. A method for manufacturing an electricity storage device, comprising:
forming an electrode;
adhering a catalyst that decomposes water and does not decompose nonaqueous electrolyte solution to a predetermined region on a surface of the electrode;
disposing surfaces of at least one pair of electrodes opposing each other with a separator interposed inbetween;
housing at the least one pair of electrodes and the separator in a container; and
housing the nonaqueous electrolyte solution in the container.

11. A method for manufacturing an electricity storage device, comprising:
forming an electrode;
adhering a catalyst that decomposes water and does not decompose nonaqueous electrolyte solution to a predetermined region on a surface of a separator;
disposing surfaces of at least one pair of electrodes opposing each other with the separator interposed inbetween;
housing the at least one pair of electrodes and the separator in a container; and
housing the nonaqueous electrolyte solution in the container.
